# EUROPÄISCHE PATENTSCHRIFT

(11) **EP 2 354 257 B1**
(45) Veröffentlichungstag und Bekanntmachung des Hinweises auf die Patenterteilung: **26.11.2014**
(21) Anmeldenummer: 11000894.3
(22) Anmeldetag: 04.02.2011
(51) Int. Cl.: C21B 7/16, C21B 7/06, F27D 3/16, F27B 1/16, F27D 1/00, F27B 1/14

(54) **Düsenstock**
Nozzle fitting
Porte-buse

(30) Priorität: 05.02.2010 DE 102010007122
(43) Veröffentlichungstag der Anmeldung: 10.08.2011
(73) Patentinhaber: SAB S.àr.l., 6776 Grevenmacher (LU)
(72) Erfinder: Kratz, Mario, 54456 Tawern (DE); Schweich, Robert, 6637 Waserbillig (LU); Wener, Marcel, 6720 Grevenmacher (LU)
(74) Vertreter: Isfort, Olaf

(56) Entgegenhaltungen:
- EP-A1- 0 163 973
- US-A- 4 023 782

## Beschreibung

Die Erfindung betrifft einen Düsenstock zum Einleiten von Heißwind in einen Schachtofen, insbesondere Hochofen, aufweisend wenigstens einen Gelenkkompensator, einen Düsenkrümmer sowie eine Düsenspitze, welche jeweils eine metallische Außenstruktur aufweisen, die an ihrer dem Heißwind zugewandten Innenseite mit einer feuerfesten Innenauskleidung versehen ist, wobei der Gelenkkompensator mit einem Ende mit dem Düsenkrümmer verbunden und mit dem anderen Ende mit einer Heißwindringleitung verbindbar ist.

Mit der Erfindung wird weiter ein Verfahren zum Herstellen eines aus zumindest einem Gelenkkompensator, einem Düsenkrümmer und einer Düsenspitze gebildeten Düsenstocks, mit dem Heißwind in einen Schachtofen, insbesondere Hochofen, einleitbar ist, vorgeschlagen, nach dem zunächst metallische Außenstrukturen für den Gelenkkompensator, den Düsenkrümmer und die Düsenspitze bereitgestellt werden, welche anschließend mit einem feuerfesten Material zur Erzeugung einer feuerfesten Innenauskleidung ausgegossen werden.

Um den Energieverbrauch bei der Eisenherstellung mittels eines Schachtofens zu reduzieren, wird Heißluft, im Hüttenwesen Heißwind genannt, mit einer Temperatur im Bereich von etwa 1200°C bis 1350°C in einen Schachtofen eingeblasen. Hierzu wird für gewöhnlich Umgebungsluft mittels eines Winderhitzers auf eine gewünschte und nahezu konstante Temperatur in dem genannten Bereich erhitzt. Der so erzeugte Heißwind wird über ein Heißwindleitungssystem dem Schachtofen zugeführt. Dabei gelangt der Heißwind zunächst von dem Winderhitzer zu einer Heißwindringleitung des Heißwindleitungssystems, welche sich in einem unteren Abschnitt des Schachtofens um diesen herum erstreckt. Von dieser Heißwindringleitung wird der Heißwind anschließend zu mehreren umfänglich um den Schachtofen verteilt angeordneten Düsenstöcken geführt, welche auch als Heißwinddüsenstöcke bezeichnet werden. Die Düsenstöcke weisen als Abschlüsse des Heißwindleitungssystems jeweils eine Düsenspitze auf, die üblicherweise im Bereich zwischen Kohlensack und Rast des Schachtofens mit diesem verbunden sind und in diesen teilweise hineinragen.

Aufgrund der hohen Temperaturen des Heißwindes ist es zur Reduzierung von Energieverlusten und zur Erhöhung von Standzeiten des Heißwindleitungssystems erforderlich, die genannten Komponenten des Systems auf ihren dem Heißwind zugewandten Innenseiten mit einer wärmedämmenden, feuerfesten Innenauskleidung zu versehen. Dieses gilt insbesondere auch für die Düsenstöcke, welche jeweils aus mehreren miteinander verbundenen Bestandteilen zusammengesetzt sind. Vor dem Zusammenbau dieser Bestandteile zu einem Düsenstock ist es erforderlich, die Bestandteile einzeln mit der feuerfesten Innenauskleidung zu versehen. Gemäß dem Stand der Technik wird die feuerfeste Innenauskleidung meist unmittelbar an der dem Heißwind zugewandten Innenseite der metallischen Außenstruktur eines solchen Bestandteils angeordnet.

Die metallischen Außenstrukturen bestehen für gewöhnlich aus Stahl und sind für die verschiedenen Bestandteile eines Düsenstocks unterschiedlich ausgebildet. Beispielsweise ist die metallische Außenstruktur der Düsenspitze im Wesentlichen konusförmig ausgebildet. Hingegen weist der Gelenkkompensator beispielsweise eine rohrförmig ausgebildete metallische Außenstruktur auf. Des Weiteren umfasst der Düsenstock einen Düsenkrümmer, dessen metallische Außenstruktur deutlich komplexer aufgebaut ist als bei der Düsenspitze und dem Gelenkkompensator. Im Rahmen der Erfindung werden diese unterschiedliche geformten, tragenden Metallteile des Düsenstocks mit dem allgemeineren Ausdruck "metallische Außenstruktur" umschrieben.

Die feuerfeste Innenauskleidung des Heißwindringleitungssystems und des Düsenstocks bewirkt, dass die Temperatur an der äußeren Oberfläche der metallischen Außenstrukturen auf etwa 300°C bis 350°C reduziert ist. Es lassen sich somit Energieverluste vermindern. Zudem wird die Sicherheit in den Arbeitsbereichen an der Außenseite des Hochofens verbessert.

Der Gelenkkompensator dient der Kompensation von aufgrund der thermischen Belastung auftretenden Verformungen des Heißwindleitungssystems. Gelenkkompensatoren sind für gewöhnlich mit Kardangelenken und Wellenbälgen ausgestattet, die in Übergangsbereichen zu den weiteren Bestandteilen eines Düsenstocks angeordnet sind. Zum Schutz der empfindlichen Kompensatorenelemente vor den hohen thermischen Belastungen ist es erforderlich, dass die feuerfesten Innenauskleidungen der unmittelbar aneinander angrenzenden Bestandteile möglichst dicht aneinander anliegen.

Weil Düsenstöcke den beschriebenen hohen thermischen Belastungen ausgesetzt sind, müssen sie von Zeit zu Zeit aufgearbeitet, das heißt mit einer neuen feuerfesten Innenauskleidung versehen werden. Das Entfernen der verbrauchten feuerfesten Innenauskleidung erfolgt meist unter Einsatz von Bohrhämmern und ähnlichem Werkzeug und ist entsprechend aufwendig. Zudem kommt es häufig vor, dass Schäden an den empfindlichen Elementen der Gelenkkompensatoren, beispielsweise an den Wellenbälgen, und an der dem Heißwind zugewandten Innenseite der metallischen Außenstruktur auftreten.

Vor diesem Hintergrund ist es die Aufgabe der Erfindung, einen Düsenstock bereitzustellen, mit dem neben der weitestgehenden Senkung des bei der Herstellung von Eisen verbundenen Energieverbrauchs auch eine Reduzierung der allgemeinen Betriebskosten des Schachtofens möglich ist.

Diese Aufgabe wird bei einem Düsenstock der eingangs genannten Art dadurch gelöst, dass dieser wenigstens ein zumindest in einem Teilbereich zwischen der metallischen Außenstruktur und der feuerfesten Innenauskleidung von Gelenkkompensator, Düsenkrümmer und/oder Düsenspitze angeordnetes Wärmedämmelement aufweist, das ein in eine Umhüllung eingebettetes, hochtemperaturfestes Wärmedämmmaterial aufweist, wobei die Umhüllung als Folie ausgebildet ist, die im Wesentlichen aus Kunststoff besteht und sich die Umhüllung während des bestimmungsgemäßen Einsatzes des Düsenstocks weitestgehend auflöst.

Die erfindungsgemäße Anordnung des zusätzlichen Wärmedämmelementes zwischen metallischer Außenstruktur und feuerfester Innenauskleidung zumindest eines Bestandteils des Düsenstocks bewirkt, dass der Energieverlust über den Düsenstock weiter reduziert wird. Die Temperatur an der Außenseite des Düsenstocks beziehungsweise der Oberfläche der metallischen Außenstruktur seiner Bestandteile kann gemäß der Erfindung um etwa 100°C bis 150°C gegenüber einem herkömmlichen Düsenstock, d.h. ohne zusätzliches Wärmedämmelement, reduziert werden. Dies entspricht einer deutlichen Energieeinsparung, die sich in Koks pro Tonne hergestelltem Roheisen darstellen lässt. Zudem wird durch die geringere thermische Belastung der metallischen Außenstrukturen und der Elemente des Gelenkkompensators die Standzeit des Düsenstocks deutlich erhöht. Während des bestimmungsgemäßen Einsatzes des Düsenstocks verbrennt die Folie und löst sich somit weitestgehend auf. Bei dem Kunststoff kann es sich beispielsweise um Polyethylen oder Polyamid sowie eine Mischung daraus handeln. Des Weiteren kommt auch ein metallisierter Kunststoff in Betracht.

Bei dem erfindungsgemäßen Düsenstock schwächt das zusätzliche Wärmedämmelement den Verbund zwischen der metallischen Außenstruktur und der feuerfesten Innenauskleidung, da sich die Umhüllung während des bestimmungsgemäßen Einsatzes des Düsenstocks weitestgehend auflöst, insbesondere verbrennt. Hierdurch ist es im Vergleich zu Düsenstöcken des Standes der Technik mit deutlich geringerem Aufwand möglich, die feuerfeste Innenauskleidung beim Aufarbeiten des Düsenstocks von den metallischen Außenstrukturen zu entfernen. Hierdurch ergibt sich eine weitere Kostenreduzierung.

Insgesamt stellt die Verwendung des erfindungsgemäßen Düsenstocks bezüglich Betriebskosten und Energieeffizienz gegenüber der Verwendung herkömmlicher Düsenstöcke eine deutlich kostengünstigere Alternative dar.

Im Rahmen der Erfindung kann vorgesehen sein, dass mehrere, insbesondere unterschiedlich ausgebildete, Wärmedämmelemente für einen Düsenstock verwendet werden, welche an besonders empfindlichen Stellen des Düsenstocks, wie beispielsweise im Bereich des Gelenkkompensators, angeordnet werden.

Nach einer weiteren vorteilhaften Ausgestaltung der Erfindung weist das Wärmedämmmaterial wenigstens eine anorganische, silikatische Substanz auf. Vorzugsweise ist die anorganische, silikatische Substanz eine hochdispersive (pyrogene) Kieselsäure. Derartige anorganische, silikatische Substanzen weisen eine sehr geringe Wärmeleitfähigkeit auf und dienen somit der Schaffung eines Wärmedämmelementes mit hervorragenden Wärmedämmeigenschaften.

Eine weitere vorteilhafte Ausgestaltung der Erfindung sieht vor, dass das Wärmedämmmaterial wenigstens ein Mittel zum Reduzieren des Wärmestrahlungstransports innerhalb des Wärmedämmmaterials aufweist. Solche Mittel werden auch als Trübungsmittel bezeichnet und dienen der Verringerung der Durchlässigkeit des Wärmedämmmaterials bezüglich Infrarotstrahlung, wobei das Trübungsmittel Infrarotstrahlung streuen und/oder absorbieren kann. Diese Ausgestaltung ist bei dem erfindungsgemäßen Düsenstock sinnvoll, da sich die Wärmedämmeigenschaften von Wärmedämmmaterialien ohne den Zusatz eines Trübungsmittels mit zunehmender Temperatur verschlechtern.

Vorzugsweise ist das Wärmedämmmaterial pulverförmig ausgebildet und zu einem Formkörper verpresst. Es lassen sich so Formkörper mit unterschiedlichsten Geometrien herstellen, um das Dämmelement ideal an seinen jeweiligen Einsatzort anpassen zu können. Vorzugsweise ist der Formkörper stabförmig ausgebildet. Es kann auch vorgesehen sein, mehrere Formkörper in eine gemeinsame Umhüllung einzubetten. Insbesondere können mehrere stabförmig ausgebildete Formkörper parallel zueinander mit geringem Abstand innerhalb der Umhüllung positioniert sein. Wird eine Umhüllung aus Kunststoff gewählt, kann so ein flexibles Wärmedämmelement ausgebildet werden, dessen Formgebung unter Verformung sehr einfach an seinen jeweiligen Einsatzort anpassbar ist.

Es wird weiter vorgeschlagen, dass das Wärmedämmmaterial evakuiert und in die Umhüllung eingeschweißt ist. Durch das Evakuieren werden die Wärmedämmeigenschaften des Wärmedämmmaterials und somit des Wärmedämmelementes weiter verbessert, indem der Anteil der beim Einsatz des Wärmedämmelementes durch Konvektion erzeugten Wärmeübertragung innerhalb des Wärmedämmmaterials reduziert wird. Das Einschweißen des verpressten Wärmedämmmaterials in die Umhüllung bewirkt weiter, dass das Wärmedämmelement während der Herstellung des Düsenstocks seine Form und physikalischen Eigenschaften zuverlässig beibehält.

Ferner wird vorgeschlagen, dass das Wärmedämmelement mit der metallischen Außenstruktur verklebt ist. Ein solches Wärmedämmelement lässt sich somit vor dem Anbringen der feuerfesten Innenauskleidung auf einfache Art und Weise mit der jeweiligen metallischen Außenstruktur verbinden. Insbesondere ein flexibel ausgebildetes Wärmedämmelement kann somit einfach und dauerhaft an seinem jeweilig gewünschten Einsatzort positioniert werden. Nach Anbringen der feuerfesten Innenauskleidung, z.B. durch Ausgießen der metallischen Außenstruktur mit Feuerfestbeton bekannter Art, wird das Wärmedämmelement durch die feuerfeste Innenauskleidung fixiert. Der verwendete Kleber kann sich somit während des Betriebs des Düsenstocks durch Verbrennen auflösen.

Zur Lösung der obigen Aufgabe wird weiter ein Verfahren der eingangs genannten Art vorgeschlagen, nach dem erfindungsgemäß an der jeweiligen dem Heißwind zugewandten Innenseite der metallischen Außenstruktur von Gelenkkompensator, Düsenkrümmer und/oder Düsenspitze vor deren Ausgießen mit dem feuerfesten Material wenigstens ein Wärmedämmelement zumindest in einem Teilbereich auf der Innenseite angeordnet wird, welches vorab durch Einschweißen eines pulverförmigen, zu einem Formkörper verpressten Wärmedämmmaterials in eine Umhüllung gebildet wird, die sich während des bestimmungsgemäßen Einsatzes des Düsenstocks weitestgehend auflöst.

Auch das erfindungsgemäße Verfahren ist mit den oben bezogen auf den Düsenstock genannten Vorteilen der Energieersparnis und Verringerung von Betriebskosten eines Schachtofens verbunden. Dabei wird vorteilhafterweise als Umhüllung eine Folie verwendet, die im Wesentlichen aus Kunststoff gebildet ist. Vorzugsweise wird das Wärmedämmelement mit der metallischen Außenstruktur verklebt.

Weitere Vorteile und Merkmale der vorliegenden Erfindung werden im Folgenden anhand der in den anhängenden Figuren gezeigten Ausführungsbeispiele näher erläutert. Dabei zeigen
- Figur 1a: eine perspektivische Darstellung einer beispielhaften Ausführungsform der Düsenspitze eines erfindungsgemäßen Düsenstocks;
- Figur 1b: einen Längsschnitt der in Figur 1a gezeigten Düsenspitze;
- Figur 1c: einen Längsschnitt der in den Figuren 1a und 1b gezeigten Düsenspitze entlang der Linie B-B in Figur 1b;
- Figur 2a: eine perspektivische Darstellung einer beispielhaften Ausführungsform des Düsenkrümmers eines erfindungsgemäßen Düsenstocks;
- Figur 2b: einen Längsschnitt des in Figur 2a gezeigten Düsenkrümmers; und
- Figur 3: eine perspektivische Explosionszeichnung einer beispielhaften Ausführungsform des Gelenkkompensators des erfindungsgemäßen Düsenstocks.

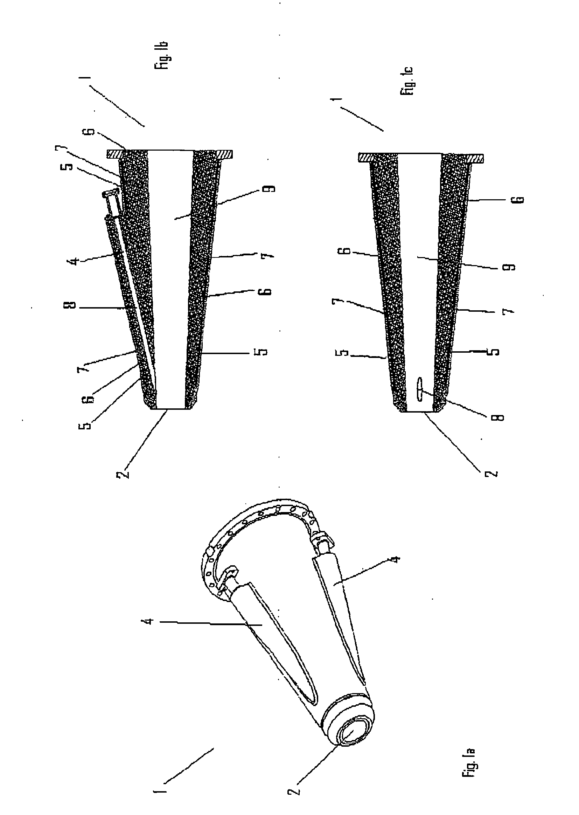

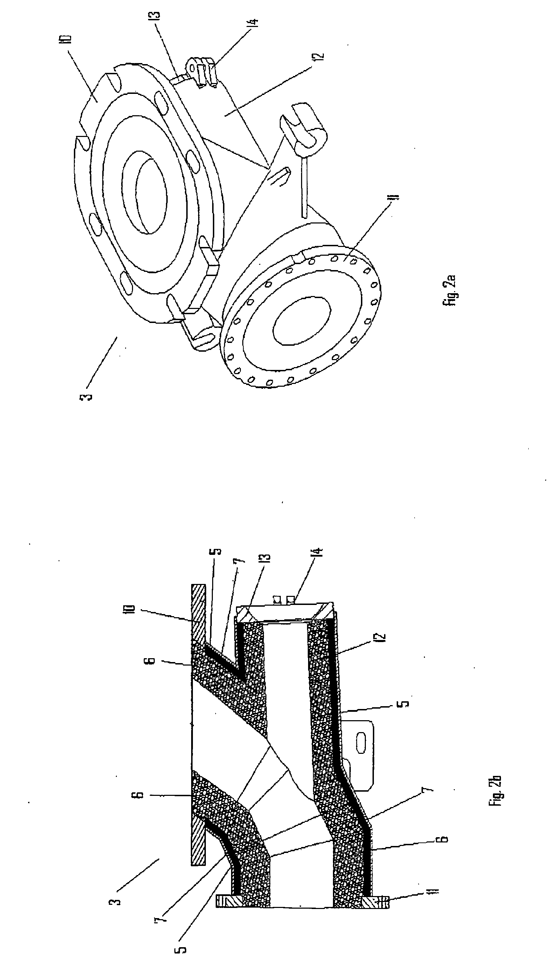

Figur 1a zeigt perspektivisch eine beispielhafte Ausführungsform der Düsenspitze 1 eines nicht dargestellten erfindungsgemäßen Düsenstocks. Beim bestimmungsgemäßen Einsatz der Düsenspitze 1 strömt Heißwind durch dieselbe und tritt aus der Austrittsöffnung 2 aus. Am anderen Ende ist die Düsenspitze 1 mit dem Düsenkrümmer 3 des Düsenstocks verbindbar, von dem eine beispielhafte Ausführungsform in den Figuren 2a und 2b gezeigt ist. Umfänglich sind an der Außenseite der Düsenspitze 1 Zuführungen 4 angeordnet, über die den Verbrennungsprozess im Schachtofen optimierende Substanzen dem Heißwindstrom zuführbar sind.

Figur 1b zeigt einen Längsschnitt durch die in Figur 1a gezeigte Düsenspitze 1. Es ist die tragende, metallische Außenstruktur 5 zu sehen, welche an ihrer dem Heißwind zugewandten Innenseite mit einer feuerfesten Innenauskleidung 6 versehen ist. Erfindungsgemäß ist zwischen der metallischen Außenstruktur 5 und der feuerfesten Innenauskleidung 6 ein Wärmedämmelement 7 angeordnet. Dieses Wärmedämmelement 7 weist ein nicht näher dargestelltes, in eine Umhüllung eingebettetes, hochtemperaturfestes Wärmedämmmaterial auf, wobei sich die Umhüllung während des bestimmungsgemäßen Einsatzes des Düsenstocks weitestgehend auflöst, insbesondere verbrennt. Die Zuführungen 4 weisen jeweils einen Zuführkanal 8 auf, der sich durch die feuerfeste Innenauskleidung 6 erstreckt und in dem Durchgangskanal 9 der Düsenspitze 1 mündet.

Figur 1c zeigt die Düsenspitze 1 der Figuren 1a und 1b in einem Längsschnitt entlang der Linie B-B in Figur 1b. Es ist insbesondere die Mündung des Zuführkanals 8 in dem Durchgangskanal 9 zu sehen. Ferner ist der erfindungsgemäße Aufbau der Düsenspitze 1 zu erkennen, nach dem zwischen der metallischen Außenstruktur 5 und der feuerfesten Innenauskleidung 6 ein Wärmedämmelement 7 angeordnet ist.

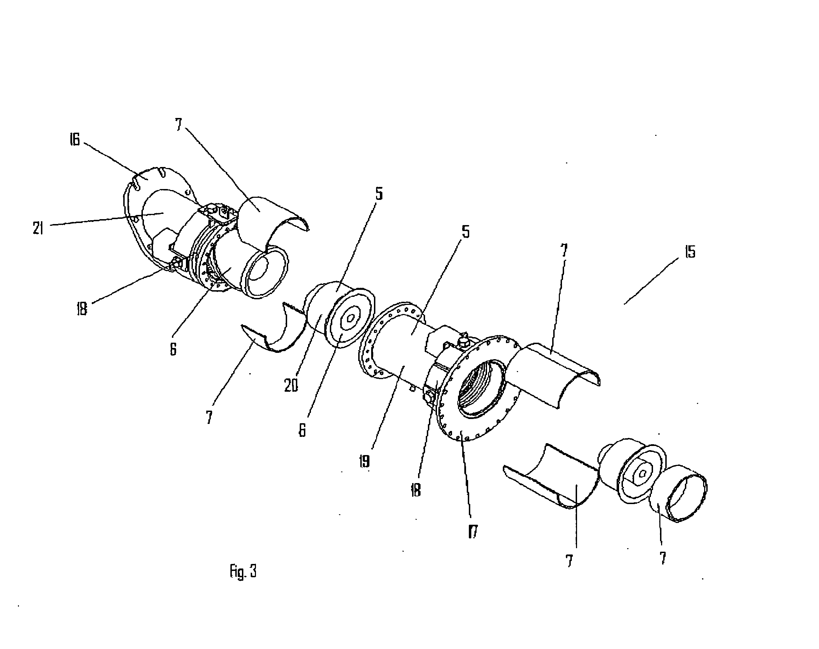

Figur 2a zeigt perspektivisch ein Ausführungsbeispiel des Düsenkrümmers 3 eines erfindungsgemäßen Düsenstocks. Der Düsenkrümmer 3 ist über den Flansch 10 mit dem Gelenkkompensator 15, wie er beispielhaft in Figur 3 gezeigt ist, verbindbar. Mit dem Flansch 11 am anderen Ende ist der Düsenkrümmer 3 mit der Düsenspitze 1 verbindbar. Der Düsenkrümmer 3 weist eine Abzweigung 12 auf, welche mit einer Klappe 13 verschlossen ist, die um ein Scharnier 14 verschwenkbar ist.

Figur 2b zeigt einen Längsschnitt durch den in Figur 2a dargestellten Düsenkrümmer 3. Es ist zu sehen, dass auch der Düsenkrümmer 3 den erfindungsgemäßen Aufbau aufweist, nach dem zwischen der metallischen Außenstruktur 5 und der feuerfesten Innenauskleidung 6 ein Wärmedämmelement 7 angeordnet ist.

Figur 3 zeigt eine Explosionszeichnung eines Ausführungsbeispiels für einen Gelenkkompensator 15 des Düsenstocks. Dieser ist über den Flansch 16 mit dem Düsenkrümmer 3 verbindbar. Mit dem Flansch 17 ist der Gelenkkompensator 15 mit einer nicht dargestellten Heißwindringleitung eines Heißwindleitungssystems verbindbar. In den Bereichen 18 weist der Gelenkkompensator 15 nicht näher dargestellte Wellenbälge auf. Zudem ist das Mittelstück 19, welches ebenso eine mit feuerfestem Material ausgekleidete metallische Außenstruktur 5 aufweist, über das Element 20 unter Ausbildung eines Kardangelenks mit dem Anschlussstück 21 verbindbar. Das Element 20 weist ebenfalls eine metallische Außenstruktur 5 sowie eine damit ausgestattete feuerfeste Innenauskleidung 6 auf.

Der Gelenkkompensator 15 weist ferner mehrere unterschiedlich ausgebildete Wärmedämmelemente 7 auf. Diese sind gemäß der Erfindung durch ein in eine Umhüllung eingebettetes, feuerfestes Wärmedämmmaterial gebildet. Die Umhüllung ist durch eine Kunststofffolie gegeben, welche mehrere stabförmig ausgebildete Formkörper aus dem Wärmedämmmaterial beinhaltet. Die stabförmig ausgebildeten Formkörper sind parallel zueinander und zur Längsersteckung des Gelenkkompensators 15 ausgerichtet. Sie bestehen aus einem zu den Formkörpern verpressten, pulverförmigen Gemisch aus hochdispersiver Kieselsäure und einem Trübungsmittel. Durch diese Ausgestaltung sind die Wärmedämmelemente 7 flexibel ausgebildet und ohne großen Kraftaufwand an die jeweilige Formgebung der weiteren Komponenten des Gelenkkompensators 15 an ihrem jeweiligen Bestimmungsort anpassbar. Während des bestimmungsgemäßen Einsatzes des Düsenstocks beziehungsweise des Gelenkkompensators 15 verbrennt die Kunststofffolie aufgrund der hohen Temperaturen und löst sich somit weitestgehend auf.

## Patentansprüche

1. Düsenstock zum Einleiten von Heißwind in einen Schachtofen aufweisend wenigstens einen Gelenkkompensator (15), einen Düsenkrümmer (3) sowie eine Düsenspitze (1), welche jeweils eine metallische Außenstruktur (5) aufweisen, die an ihrer dem Heißwind zugewandten Innenseite mit einer feuerfesten Innenauskleidung (6) versehen ist, wobei der Gelenkkompensator (15) mit einem Ende mit dem Düsenkrümmer (3) verbunden und mit dem anderen Ende mit einer Heißwindringleitung verbindbar ist, **gekennzeichnet durch** wenigstens ein zumindest in einem Teilbereich zwischen der metallischen Außenstruktur (5) und der feuerfesten Innenauskleidung (6) von Gelenkkompensator (15), Düsenkrümmer (3) und/oder Düsenspitze (1) angeordnetes Wärmedämmelement (7), das ein in eine Umhüllung eingebettetes, hochtemperaturfestes Wärmedämmmaterial aufweist, wobei die Umhüllung als Folie ausgebildet ist, die im Wesentlichen aus Kunststoff besteht und sich die Umhüllung während des bestimmungsgemäßen Einsatzes des Düsenstocks weitestgehend auflöst.

2. Düsenstock nach Anspruch 1, **dadurch gekennzeichnet, dass** das Wärmedämmmaterial wenigstens eine anorganische, silikatische Substanz aufweist.

3. Düsenstock nach Anspruch 2, **dadurch gekennzeichnet, dass** die anorganische, sililkatische Substanz eine hochdispersive Kieselsäure ist.

4. Düsenstock nach einem der vorhergehenden Ansprüche, **dadurch gekennzeichnet, dass** das Wärmedämmmaterial wenigstens ein Mittel zum Reduzieren des Wärmestrahlungstransports innerhalb des Wärmedämmmaterials aufweist.

5. Düsenstock nach einem der vorhergehenden Ansprüche, **dadurch gekennzeichnet, dass** das Wärmedämmmaterial pulverförmig ausgebildet und zu einem Formkörper verpresst ist.

6. Düsenstock nach Anspruch 5, **dadurch gekennzeichnet, dass** der Formkörper stabförmig ausgebildet ist.

7. Düsenstock nach einem der vorhergehenden Ansprüche, **dadurch gekennzeichnet, dass** das Wärmedämmmaterial evakuiert und in die Umhüllung eingeschweißt ist.

8. Düsenstock nach einem der vorhergehenden Ansprüche, **dadurch gekennzeichnet, dass** das Wärmedämmelement (7) mit der metallischen Außenstruktur (5) verklebt ist.

9. Düsenstock nach einem der vorhergehenden Ansprüche, **dadurch gekennzeichnet, dass** der Schachtofen ein Hochofen ist.

10. Verfahren zum Herstellen eines aus zumindest einem Gelenkkompensator (15), einem Düsenkrümmer (3) und einer Düsenspitze (1) gebildeten Düsenstocks, mit dem Heißwind in einen Schachtofeneinleitbar ist, wobei zunächst metallische Außenstrukturen (5) für den Gelenkkompensator (15), den Düsenkrümmer (3) und die Düsenspitze (1) bereitgestellt und mit einem feuerfesten Material ausgegossen werden,
**dadurch gekennzeichnet, dass** an der jeweiligen dem Heißwind zugewandten Innenseite der metallischen Außenstruktur (5) von Gelenkkompensator (15), Düsenkrümmer (3) und/oder Düsenspitze (1) vor deren Ausgießen mit dem feuerfesten Material wenigstens ein Wärmedämmelement (7) zumindest in einem Teilbereich der Innenseite angeordnet wird, welches vorab durch Einschweißen eines pulverförmigen, zu einem Formkörper verpressten Wärmedämmmaterials in eine Umhüllung ausgebildet wird, wobei als Umhüllung eine Folie verwendet wird, die im Wesentlichen aus Kunststoff gebildet ist und sich während des bestimmungsgemäßen Einsatzes des Düsenstocks weitestgehend auflöst.

11. Verfahren nach Anspruch 10, **dadurch gekennzeichnet, dass** das Wärmedämmelement (7) mit der metallischen Außenstruktur (5) verklebt wird.

12. Düsenstock nach einem der Ansprüche 1 bis 9, **dadurch gekennzeichnet, dass** er gemäß dem Verfahren nach einem der Ansprüche 10 oder 11 hergestellt ist.

## Claims

1. Nozzle fitting for introduction of hot blast into a shaft furnace, said nozzle fitting being comprised of at least one hinged compensator (15), one nozzle elbow (3) as well as one nozzle tip (1), each comprised of a metallic exterior structure (5) which at its inside facing the hot blast is provided with a refractory interior lining (6), wherein the hinged compensator (15) is connected with one end to the nozzle elbow (3) and is combinable with the other end to a hot blast ring main.
**characterized by** at least one thermal insulation element (7) arranged at least in a partial area between the metallic exterior structure (5) and the refractory interior lining (6) of the hinged compensator (15), nozzle elbow (3) and/or nozzle tip (1), said thermal insulation element (7) being comprised of a highly temperature-resistant thermal insulation material embedded into a cover, wherein the cover is configured as a foil which is essentially made from plastic material and dissolves itself during the intended use of the nozzle fitting as far as possible.

2. Nozzle fitting according to claim 1, **characterized in that** the thermal insulation material is comprised of at least an inorganic, siliceous substance.

3. Nozzle fitting according to claim 2, **characterized in that** the inorganic, siliceous substance is a highly dispersive silicic acid.

4. Nozzle fitting according to any of the preceding claims, **characterized in that** the thermal insulation material is comprised of at least one means to reduce the thermal radiation transport within the thermal insulation material.

5. Nozzle fitting according to any of the preceding claims, **characterized in that** the thermal insulation material is configured in a powder-like form and pressed to a formed body.

6. Nozzle fitting according to claim 5, **characterized in that** the formed body is of a rod-shaped configuration.

7. Nozzle fitting according to any of the preceding claims, **characterized in that** the thermal insulation material is evacuated and shrink-wrapped into the cover.

8. Nozzle fitting according to any of the preceding claims, **characterized in that** the thermal insulation element (7) is glued to the metallic exterior structure (5).

9. Nozzle fitting according to any of the preceding claims, **characterized in that** the shaft furnace is a blast furnace.

10. Method for the production of a nozzle fitting comprised of at least one hinged compensator (15), one nozzle elbow (3) and one nozzle tip (1), by the aid of which hot blast can be introduced into a shaft furnace, wherein the metallic exterior structures (5) for the hinged compensator (15), the nozzle elbow (3) and the nozzle tip (1) are initially provided and grouted with a refractory material,
**characterized in that** at the inside of the metallic exterior structure (5) of the hinged compensator (15), nozzle elbow (3) and/or nozzle tip (1) facing the hot blast at least one thermal insulation element (7) is inventively arranged at least in one partial area on the inside prior to their encapsulation with the refractory material, said element being formed in advance by shrink-wrapping of a powder-like thermal insulation material pressed to a formed body into a cover, wherein a foil mainly formed of plastic material is utilized as cover and the cover dissolves itself during the intended use of the nozzle fitting as far as possible.

11. Method according to claim 10, **characterized in that** the thermal insulation material (7) is glued to the metallic exterior structure (5).

12. Nozzle fitting according to any of the preceding claims 1 to 9, **characterized in that** it is manufactured in accordance with the method according to any of the preceding claims 10 or 11.

## Revendications

1. Raccord de gicleur pour l'introduction de vent chaud dans un four à cuve, présentant au moins un compensateur d'articulation (15), un coude de buse (3) et une pointe de buse (1), qui présentent chacun une structure extérieure métallique (5) qui est pourvue, sur son côté intérieur dirigé vers le vent chaud, d'un garnissage intérieur réfractaire (6), étant entendu que le compensateur d'articulation (15) est relié à une extrémité avec le coude de buse (3) et à l'autre extrémité avec une conduite annulaire de vent chaud,
**caractérisé par** au moins un élément d'isolation thermique (7) agencé au moins dans une zone partielle entre la structure extérieure métallique (5) et le garnissage intérieur réfractaire (6) du compensateur d'articulation (15), du coude de buse (3) et/ou de la pointe de buse (1), lequel élément présente un matériau d'isolation thermique résistant aux températures élevées logé dans une enveloppe, étant entendu que l'enveloppe est réalisée sous la forme d'une feuille qui est principalement constituée de matière plastique et que l'enveloppe se dissout dans sa plus grande partie lors de l'utilisation du raccord de gicleur conformément à sa destination.

2. Raccord de gicleur selon la revendication 1, **caractérisé en ce que** le matériau d'isolation thermique présente au moins une substance anorganique silicatée.

3. Raccord de gicleur selon la revendication 2, **caractérisé en ce que** la substance anorganique silicatée est un acide silicique à dispersion élevée.

4. Raccord de gicleur selon l'une des revendications précédentes, **caractérisé en ce que** le matériau d'isolation thermique présente au moins un moyen permettant de réduire le transport de rayonnement thermique à l'intérieur du matériau d'isolation thermique.

5. Raccord de gicleur selon l'une des revendications précédentes, **caractérisé en ce que** le matériau d'isolation thermique est réalisé sous forme de poudre et comprimé dans un corps moulé.

6. Raccord de gicleur selon la revendication 5, **caractérisé en ce que** le corps moulé est réalisé en forme de barre.

7. Raccord de gicleur selon l'une des revendications précédentes, **caractérisé en ce que** le matériau d'isolation thermique est mis sous vide et soudé dans l'enveloppe.

8. Raccord de gicleur selon l'une des revendications précédentes, **caractérisé en ce que** l'élément d'isolation thermique (7) est collé avec la structure extérieure métallique (5).

9. Raccord de gicleur selon l'une des revendications précédentes, **caractérisé en ce que** le four à cuve est un haut fourneau.

10. Procédé de fabrication d'un raccord de gicleur constitué d'au moins un compensateur d'articulation (15), un coude de buse (3) et une pointe de buse (1), avec lequel du vent chaud peut être introduit dans un four à cuve, selon lequel, dans une première étape, des structures extérieures métalliques (5) sont préparées pour le compensateur d'articulation (15), le coude de buse (3) et la pointe de buse (1) et un matériau réfractaire est coulé dans ces structures,
**caractérisé en ce qu'**au moins un élément d'isolation thermique (7) est agencé dans au moins une zone partielle sur le côté intérieur respectif dirigé vers le vent chaud de la structure extérieure métallique (5) du compensateur d'articulation (15), 1 du coude de buse (3) et/ou de la pointe de buse (1) avant que le matériau réfractaire n'y soit coulé, lequel élément est constitué préalablement par le soudage dans une enveloppe d'un matériau d'isolation thermique sous forme de poudre comprimé dans un corps moulé, étant entendu qu'on utilise comme enveloppe une feuille qui est principalement constituée de matière plastique et qui se dissout dans sa plus grande partie lors de l'utilisation du raccord de gicleur conformément à sa destination.

11. Procédé selon la revendication 10, **caractérisé en ce que** l'élément d'isolation thermique (7) est collé avec la structure extérieure métallique (5).

12. Raccord de gicleur selon l'une des revendications 1 à 9, **caractérisé en ce qu'**il est fabriqué conformément au procédé selon l'une des revendications 10 ou 11.
